## Europäisches Patentamt
## European Patent Office
## Office européen des brevets

(19)

(11) Publication number : **0 157 074**
**B1**

# EUROPEAN PATENT SPECIFICATION

(12)

(45) Date of publication of patent specification :
11.11.87

(21) Application number : 85100012.5

(22) Date of filing : 14.04.82

(60) Publication number of the earlier application in accordance with Art. 76 EPC : 0064184

(51) Int. Cl.⁴ : **H 02 B 11/02**

(54) **Drawer-type circuit breaker arrangement.**

(30) Priority : 14.04.81 JP 54081/81
14.04.81 JP 54082/81

(43) Date of publication of application :
09.10.85 Bulletin 85/41

(45) Publication of the grant of the patent :
11.11.87 Bulletin 87/46

(84) Designated contracting states :
DE FR GB IT

(56) References cited :
US-A- 3 288 956
US-A- 3 663 773
US-A- 4 012 610

(73) Proprietor : **MITSUBISHI DENKI KABUSHIKI KAISHA**
**2-3, Marunouchi 2-chome Chiyoda-ku**
**Tokyo 100 (JP)**

(72) Inventor : **Ishikawa, Takayoshi c/o Mitsubishi Denki**
**K.K. Fukuyama Works No. 1-8, Midori-machi**
**Fukuyama-shi Hiroshima (JP)**
Inventor : **Genba, Yasushi c/o Mitsubishi Denki**
**K.K. Fukuyama Works No. 1-8, Midori-machi**
**Fukuyama-shi Hiroshima (JP)**
Inventor : **Tamaru, Shigemi c/o Mitsubishi Denki**
**K.K. Fukuyama Works No. 1-8, Midori-machi**
**Fukuyama-shi Hiroshima (JP)**
Inventor : **Eguchi, Kiyoshi c/o Mitsubishi Denki**
**K.K. Fukuyama Works No. 1-8, Midori-machi**
**Fukuyama-shi Hiroshima (JP)**

(74) Representative : **Lehn, Werner, Dipl.-Ing. et al**
**Hoffmann, Eitle & Partner Patentanwälte Arabellas-**
**trasse 4**
**D-8000 München 81 (DE)**

## Description

The present invention is directed to a drawer-type circuit breaker arrangement comprising :

a housing means ;

circuit breaker means being movably supported by roller means within said housing means ;

extendable support rail means on said housing means for supporting said circuit breaker means by means of said roller means ; and

latch means for initially preventing extension of said support rail means when said circuit breaker means is in a first position within said housing means.

Such a circuit breaker is disclosed in US-A-3 288 956 and US-A-4 012 610.

The above prior art devices have the disadvantage of providing a relatively short outward movement during disconnection which gives inadequate access to the circuit breaker.

In another known drawer-type circuit breaker arrangement the circuit breaker is supported for rolling movement on at least one support rail. A latch lever is pivoted to the support rail and is normally biased for engagement by a stop member on the circuit breaker by means of a spring to prevent withdrawal of the circuit breaker from the housing. An extension rail is provided with a projection which allows the extension rail to be supported in alignment with the support rail by means of pins and on the support rail. When the extension rail is secured in place a protrusion on the end of the projection engages the latch lever to bias the same out of blocking position relative to the stop member against the force of the spring thereby allowing the circuit breaker to roll outwardly from the housing onto the extension rail. When not in use the extension rail is completely disconnected from the circuit breaker assembly and is therefore susceptible to being misplaced and therefore unavailable when needed.

A Document US-A-3 663 773 is directed to a switch gear draw-out apparatus with a clutch interlock. A pair of support rails are pivotally mounted on the circuit breaker housing on opposite sides of the circuit breaker for movement between a vertical stored position and a horizontal operative position for supporting the circuit breaker on rollers during a drawing operation. A manually operated lever is also pivotally mounted on one side of the circuit breaker housing for controlling the movement of a cam which in turn controls the initial disconnecting movement of the circuit breaker during withdrawal and the final connection of the circuit breaker upon insertion thereof. A clutch is operatively associated with the lever and cam to prevent the operation of the cam when the circuit breaker contacts are in the closed position. In addition to requiring a complex assembly of springs and levers to operatively clutch and unclutch the lever to the cam member, a reverse movement must be applied to the lever after the initial disconnecting movement to unlatch the circuit breaker from the housing to permit the same to be drawn outwardly onto the support rails.

An object of the present invention is to provide a new and improved drawer-type circuit breaker having extendable and retractable support rails and associated latch means which in a simple manner prevents the support rails from being extended until the circuit breaker is disconnected and then subsequently prevents movement of the circuit breaker outwardly on the support rails until said support rails have been fully extended.

According to the invention the circuit breaker defined in the introductory paragraph of this specification is characterised in that said roller means are provided on said circuit breaker means ; and said latch means is pivotally mounted on said housing means for engagement with said roller means and said support rail means and is operable by said roller means upon movement of said circuit breaker means to a second position within said housing means to allow extension of said support rail means and to prevent further outward movement of said circuit breaker means until said support rail means are fully extended.

Preferably, said housing means has a pair of side walls with respective horizontally disposed slots in which said roller means extend.

Preferably, said latch means comprises a latch lever having a first arm extending into a path of said roller means and a second arm having a laterally extending flange underlying said support rail means ; said support rail means is provided with a notch adjacent one end thereof for receiving said laterally extending flange on said latch means to prevent extension of said support rail means ; and upon engagement of said first arm of said latch means pivots out of said notch to bring said flange into engagement with the bottom edge of said support rail means to allow withdrawal of said rail means while still preventing movement of said roller means.

Expediently, said support rail means is further provided with a tapered bottom edge adjacent the other end thereof for permitting further pivotal movement of said latch means to allow said circuit breaker means to be drawn outwardly onto said support rail means.

Expediently, said support rail means is adapted to be extendably mounted on said housing means by means of a horizontally elongated slot provided therein and a pin secured to said housing means and located in said slot.

The foregoing and other objects, features and advantages of the invention will be apparent from the following more particular description of a preferred embodiment of the invention as illustrated in the accompanying drawings, in which :

Figure 1 is a perspective view of a circuit breaker in the fully engaged position in a housing ;

Figure 2 is a side elevation view of the circuit breaker in the fully engaged position within the housing and the support rails latched in retracted position ;

Figure 3 is a side elevation view similar to Figure 1 showing the circuit breaker in the disengaged position within the housing with the support rails still retracted but unlatched ;

Figure 4 is a side elevation view of the circuit breaker with the support rails fully extended and the circuit breaker fully removed from said housing on said support rails ;

Figure 5 is an enlarged perspective view of the outer end of a support rail and the latch means associated therewith ;

Figure 6 is an enlarged side elevation view of the arrangement shown in Figure 5 with the circuit breaker in the fully engaged position and the latch means preventing withdrawal of the support rail ;

Figure 7 is a view similar to Figure 6 with the circuit breaker disengaged and the latch means in position to allow extension of the support rail while preventing removal of said circuit breaker from the housing ;

Figure 8 is a view similar to Figure 7 showing the rail in the fully extended position and the latch in a position to allow withdrawal of the circuit breaker from the housing onto the support rails ; and

Figure 9 is a view similar to Figure 8 showing the relationship of the roller and latch to permit insertion of the circuit breaker.

The drawer-type circuit breaker device according to the present invention is comprised of a circuit breaker assembly 12 carried by a frame 10 which in turn is movably mounted within a fixed frame 14. Identical support means latch means and operating means are provided on opposite sides of the circuit breaker assembly but will only be described with respect to the side of the circuit breaker assembly visible in the drawings. The support means is comprised of a pair of rollers 13a and 13b mounted on the side of the movable frame 10 of the circuit breaker assembly and an elongated horizontal slot 14a formed in the side of the fixed frame 14. The forward end of the slot 14a is open to allow the circuit breaker assembly to be completely withdrawn from the fixed frame 14 and a vertically extending notch 14b intersects the slot 14a to accommodate an actuating roller 25 as will be described in greater detail hereinafter. The rollers 13a and 13b are grooved and ride on the lower surface of the slot 14a. The upper edge of the slot 14a extends within the grooves on the rollers with limited clearance so as to reduce the vertical movement of the circuit breaker assembly relative to the fixed frame to a minimum while providing for ease of horizontal movement.

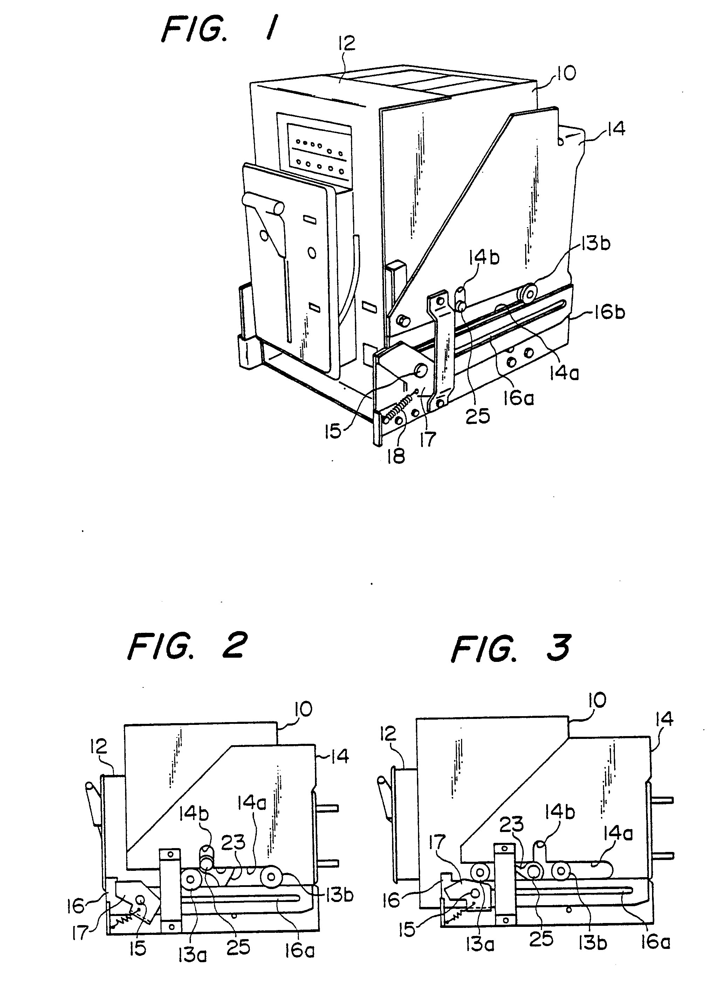

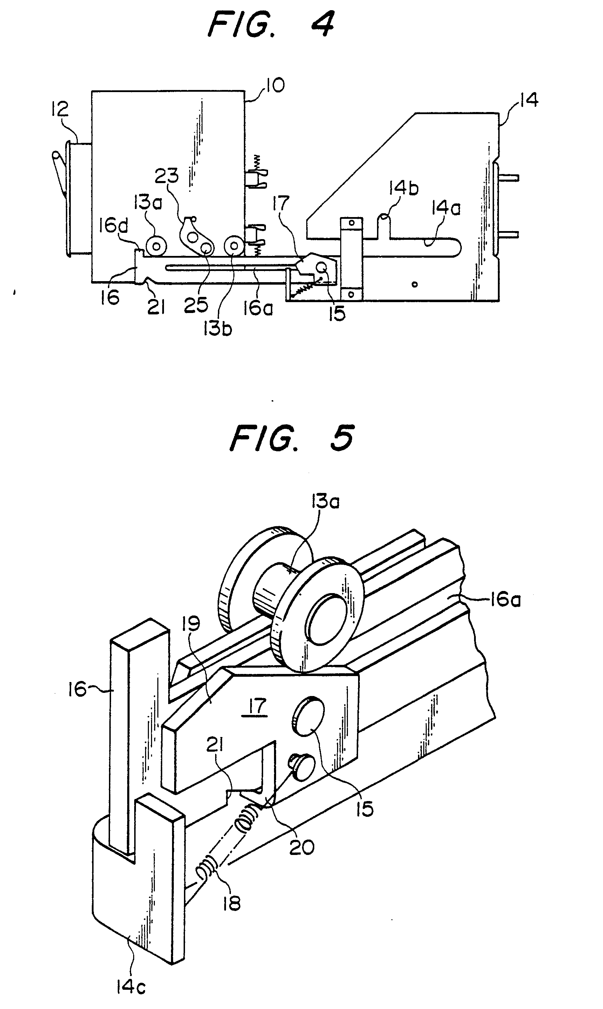

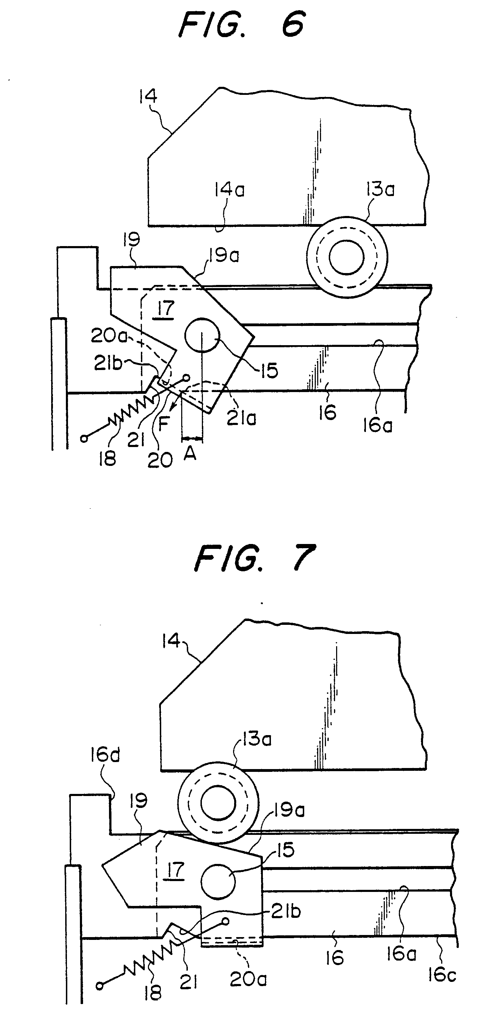

An extendable support rail 16 is movably mounted on the outside of the side wall of the fixed frame 14 by means of a headed pin 15 secured to the sides of the fixed frame 14 and located in an elongated closed horizontal slot 16a. When the support rail 16 is in its retracted position as shown in Figure 2, the inner end of the support rail 16 will be supported by the pin 15a extending outwardly from the side of the fixed frame 14. The upper edge of the support rail 16 is coincident with the lower edge of the slot 14a so that the rollers 13a and 13b also rest in rolling engagement on the upper edge of the support rail 16. The lower forward edge of the fixed frame 14 is bent outwardly at 14c as best seen in Figure 5 so as to provide an additional sliding support for the support rail 16. The lower edge of the support rail 16 is provided with a triangular notch 21 adjacent the forward end of the slot 16a as best seen in Figure 6. When the support rail 16 is in the completely retracted position as shown in Figure 6 the rearward end 21a of the notch 21 is spaced forwardly a distance A from the center of the pin 15. A latch member 17 is pivotally mounted on the pin 15 outwardly of the support rail 16. One arm 19 of the latch lever 17 extends above the lower edge of the slot 14 when the latch lever is in the latching position shown in Figure 6 and is provided with a slopping surface 19a which is adapted to be engaged by the roller 13a upon disconnecting the circuit breaker assembly. The other arm of the latch lever 17 is provided with a laterally extending flange 20 which is adapted to extend beneath the support rail 16. The latch lever 17 is biased in the clockwise direction by a spring 18 connected between the lever 17 and the fixed frame 14.

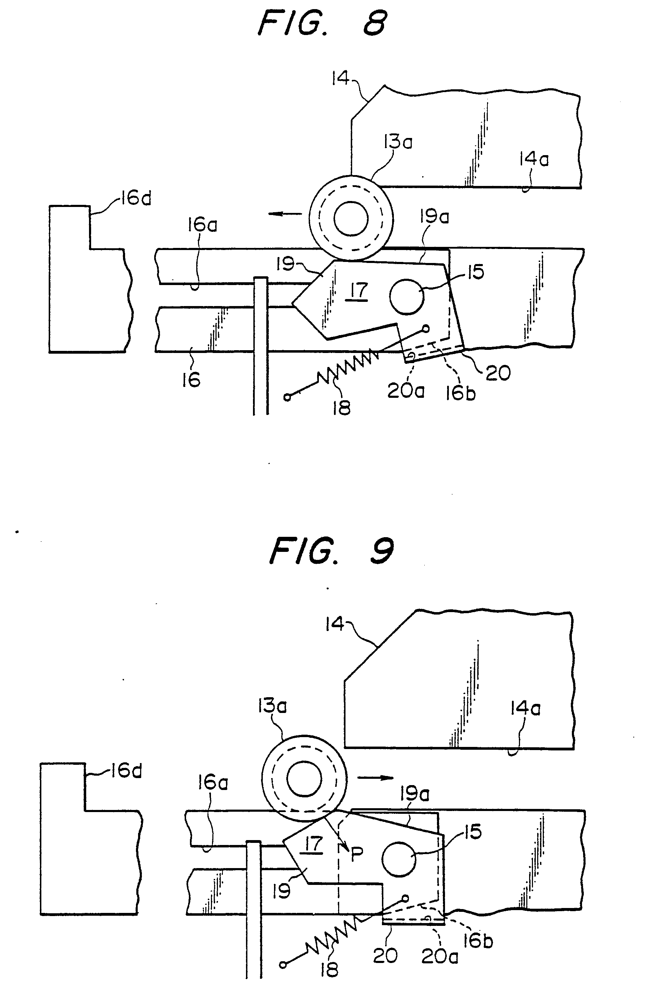

In operation, the latch lever 17 is normally biased by the spring 18 into the position shown in Figures 1, 2 and 6 when the circuit breaker assembly is fully inserted into the fixed frame 14 and the support rails 16 are fully retracted. In this position, the upper surface 20a of the flange 20 on the latch lever 17 will engage the surface 21b of the notch 21 in the bottom edge of the support rail 16 with a force indicated by the arrow F. Therefore, the support rails 16 will be prevented from being moved horizontally into an extended position. Upon disconnection of the circuit breaker assembly, by means to be described hereinafter, the roller 13a will move into engagement with the latch lever 17 as shown in Figures 3 and 7 to pivot the latch lever 17 against the force of the spring 18. The upper surface 20a of the flange 20 of the latch lever 17 will then come into engagement with the horizontal bottom edge of the guide rail 16 to prevent further pivotal movement. Therefore, the arm 19 of the latch lever 17 will still be in position to prevent further withdrawal of the circuit breaker assembly due to engagement of the roller 13a with the edge 19a of the latch lever 17. Since the latch no longer engages the notch 21 in the guide rail 16, the guide rails 16 may be extended to the positions shown in Figures 4, 8 and 9. Once the guide rails 16 are extended to their outermost position as determined by the length of the slot 16a, the chamfered surface 16b on the lower rear edge of the rail 16 will be disposed next to the flange 20 on the latch lever 17. Thus, the outward movement of the circuit breaker assembly will now be permitted and the roller 13a will pivot the latch lever 17 in a counterclockwise direction as seen in Figure 8. The circuit breaker assembly can then be withdrawn from the fixed housing 14 to the extent shown in Figure 4 wherein the roller 13a will engage the upstanding stop 16d at the end of the guide rail 16. When it is desired to reinsert the circuit breaker assembly into the fixed housing 14, the circuit breaker assembly will be moved in the direction of the arrow in Figure 9 and the rollers 13a and 13b will sequentially engage the latch lever 17 with a force indicated by the arrow P to force the latch lever in the counterclockwise direction thereby permitting passage of the rollers from the extended support rails into the slots 14a in the sides of the fixed housing 14.

In order to engage and disengage the contacts of the circuit breaker assembly as it moves into and out of the fully inserted position, power operated actuating levers 23 are pivotally mounted at 24 on opposite sides of the movable frame 10 of the circuit breaker assembly.

## Claims

1. A drawer-type circuit breaker arrangement comprising :
   a housing means (14) ;
   circuit breaker means (12) being movably supported by roller means (13a, 13b) within said housing means (14) ;
   extendable support rail means (16) on said housing means (14) for supporting said circuit breaker means (12) by means of said roller means (13a, 13b) ; and
   latch means (17) for initially preventing extension of said support rail means (16) when said circuit breaker means (12) is in a first position within said housing means (14),
   characterised in that :
   said roller means (13a, 13b) are provided on said circuit breaker means (12) ; and
   said latch means (17) is pivotally mounted on said housing means (14) for engagement with said roller means (13a, 13b) and said support rail means (16) and is operable by said roller means (13a, 13b) upon movement of said circuit breaker means (12) to a second position within said housing means (14) to allow extension of said support rail means and to prevent further outward movement of said circuit breaker means (12) until said support rail means (16) are fully extended.

2. A drawer-type circuit breaker arrangement according to claim 1, characterised by said housing means (14) having a pair of side walls with respective horizontally disposed slots (14a) in which said roller means (13a, 13b) extend.

3. A drawer-type circuit breaker arrangement according to claim 1 or 2, characterised in that said latch means (17) comprises a latch lever (17) having a first arm (19) extending into a path of said roller means (13a, 13b) and a second arm having a laterally extending flange (20) underlying said support rail means (16) ; said support rail means (16) is provided with a notch (21) adjacent one end thereof for receiving said laterally extending flange (20) on said latch means (17) to prevent extension of said support rail means (16) ; and upon engagement of said first arm (19) said latch means (17) pivots out of said notch (21) to bring said flange (20) into engagement with the bottom edge of said support rail means (16) to allow withdrawal of said rail means (16) while still preventing movement of said roller means (13a, 13b).

4. A drawer-type circuit breaker arrangement according to claim 3, characterised in that said support rail means (16) is further provided with a tapered bottom edge (16b) adjacent the other end thereof for permitting further pivotal movement of said latch means (17) to allow said circuit breaker means (12) to be drawn outwardly onto said support rail means (16).

5. A drawer-type circuit breaker arrangement according to claim 4, characterised in that said support rail means (16) is adapted to be extendably mounted on said housing means (14) by means of a horizontally elongated slot (16a) provided therein and a pin (15) secured to said housing means (14) and located in said slot (16a).

## Patentansprüche

1. Anordnung von Leistungsschaltern des ausfahrbaren Typs, die eine Rahmenvorrichtung (14), eine Leistungsschaltervorrichtung (12), die in der Rahmenvorrichtung (14) durch Rollvorrichtungen (13a, 13b) beweglich gelagert ist, eine ausziehbare Trageschienenvorrichtung (16) an der Rahmenvorrichtung (14) zur Halterung der genannten Leistungsschaltervorrichtung (12) mit Hilfe der Rollvorrichtung (13a, 13b) und eine Einschnappklinkenvorrichtung (17), die anfangs das Herausziehen der Trageschienenvorrichtung (16) verhindert, wenn die Leistungsschaltervorrichtung (12) sich in einer ersten Position innerhalb der Rahmenvorrichtung (14) befindet, umfaßt, dadurch gekennzeichnet, daß die Rollvorrichtungen (13a, 13b) an der genannten Leistungsschaltervorrichtung (12) vorgesehen ist und die Einschnappklinkenvorrichtung (17) drehbar an der Rahmenvorrichtung (14) zum Eingriff mit den Rollvorrichtungen (13a, 13b) und der Trageschienenvorrichtung (16) gelagert ist und von den Rollvorrichtungen (13a, 13b) ausgelöst wird aufgrund der Bewegung der Leistungsschaltervorrichtung (12) in eine zweite Position innerhalb der Rahmenvorrichtung (14), um das Herausziehen der Trageschienenvorrichtung zuzulassen und eine weitere Auswärtsbewegung der Leistungsschaltervorrichtung (12) zu verhindern, bis die Trageschienenvorrichtung (16) vollständig herausgezogen ist.

2. Anordnung von Leistungsschaltern des ausfahrbaren Typs gemäß Anspruch 1, dadurch gekennzeichnet, daß die Rahmenvorrichtung (14) ein Seitenwandpaar mit jeweils horizontal angeordneten Schlitzen (14a) besitzt, in denen die Rollvorrichtungen (13a, 13b) herausgezogen werden.

3. Anordnung von Leistungsschaltern des ausfahrbaren Typs gemäß Anspruch 1 oder 2, dadurch gekennzeichnet, daß die Einschnappklinkenvorrichtung (17), einen Klinkenhebel (17), der einen ersten Arm (19) in eine Spur der Rollvorrichtung (13a, 13b) hineinreichend und einen zweiten Arm besitzt, der einen seitlich verlaufenden Flansch (20) aufweist, der unter die Trageschienenvorrichtung (16) greift, beinhaltet, daß die Trageschienenvorrichtung (16) an einem der Enden mit einer Kerbe (21) zur Aufnahme des seitlich verlaufenden Flansches (20) der Einschnappklinkenvorrichtung (17) versehen ist, um ein Herausziehen der Trageschienenvorrichtung (16) zu verhindern, und daß aufgrund des Eingriffs des ersten Armes (19) die Einschnappklinkenvorrichtung (17) aus der Kerbe (21) herausdreht, um den Flansch (20) in Eingriff mit der Unterkante des Trageschienenvorrichtung (16) zu bringen, um ein Herausziehen der Trageschienenvorrichtung (16) zuzulassen, aber weiterhin die Bewegung der Rollvorrichtungen (13a, 13b) zu verhindern.

4. Anordnung von Leistungsschaltern des ausfahrbaren Typs gemäß Anspruch 3, dadurch gekennzeichnet, daß die Trageschienenvorrichtung (16) weiter mit einer spitz zulaufenden Unterkante (16b) am anderen Ende ausgerüstet ist, um eine weitere Verdrehung der Klinkeneinschaltvorrichtung (17) zu verhindern und um dadurch ein weiteres Herausziehen der Leistungsschaltervorrichtung (12) auf der Trageschienenvorrichtung (16) zu ermöglichen.

5. Anordnung von Leistungsschaltern des ausfahrbaren Typs gemäß Anspruch 4, dadurch gekennzeichnet, daß die Trageschienenvorrichtung (17) derart angepaßt ist, daß sie herausziehbar an der Rahmenvorrichtung (14) befestigt ist mit Hilfe eines horizontal verlaufenden Schlitzes (16a), der darin vorgesehen ist, und eines Zapfens (15), der an der Rahmenvorrichtung (14) befestigt und in dem Schlitz (16a) angeordnet ist.

**Revendications**

1. Dispositif coupe-circuit du type à tiroir, comprenant :
un caisson (14) ;
un moyen coupe-circuit (12) supporté avec faculté de mouvement à l'intérieur dudit caisson (14), par l'intermédiaire de galets (13a, 13b) ;
des rails de support déployables (16), implantés sur ledit caisson (14) pour supporter ledit moyen coupe-circuit (12) à l'aide desdits galets (13a, 13b) ; et
un moyen de verrouillage (17), pour empêcher initialement un déploiement desdits rails de support (16) lorsque ledit moyen coupe-circuit (12) occupe une première position à l'intérieur dudit caisson (14),
caractérisé par le fait que :
lesdits galets (13a, 13b) sont prévus sur ledit moyen coupe-circuit (12) ; et que
ledit moyen de verrouillage (17) est monté pivotant sur ledit caisson (14) pour venir en prise avec lesdits galets (13a, 13b) et lesdits rails de support (16), et peut être actionné par lesdits galets (13a, 13b), lors d'un mouvement dudit moyen coupe-circuit (12) vers une seconde position à l'intérieur dudit caisson (14), pour autoriser un déploiement desdits rails de support et pour interdire une poursuite du mouvement sortant dudit moyen coupe-circuit (12) jusqu'à ce que lesdits rails de support (16) soient intégralement déployés.

2. Dispositif coupe-circuit du type à tiroir selon la revendication 1, caractérisé par le fait que ledit caisson (14) possède une paire de parois latérales, munies de fentes respectives (14a) qui sont disposées horizontalement et dans lesquelles lesdits galets (13a, 13b) pénètrent.

3. Dispositif coupe-circuit du type à tiroir selon la revendication 1 ou 2, caractérisé par le fait que ledit moyen de verrouillage (17) consiste en un levier de verrouillage (17) comprenant un premier bras (19) s'engageant dans une trajectoire desdits galets (13a, 13b), ainsi qu'un second bras muni d'une aile (20) à étendue latérale, sous-jacente auxdits rails de support (16) ; lesdits rails de support (16) sont dotés d'une encoche (21) adjacente à l'une de leurs extrémités, pour recevoir ladite aile (20) s'étendant latéralement sur ledit moyen de verrouillage (17), de manière à empêcher un déploiement desdits rails de support (16) ; et, lors de la venue en prise dudit premier bras (19), ledit moyen de verrouillage (17) sort de ladite encoche (21) par pivotement, pour mettre ladite aile (20) en prise avec le bord inférieur desdits rails de support (16), de façon à autoriser une extraction de ces rails (16) tout en continuant d'interdire un mouvement desdits galets (13a, 13b).

4. Dispositif coupe-circuit du type à tiroir, selon la revendication 3, caractérisé par le fait que lesdits rails de support (16) sont en outre pourvus d'un bord inférieur biseauté (16b), adjacent à leur autre extrémité, pour autoriser une poursuite du pivotement dudit moyen de verrouillage (17) afin de permettre audit moyen coupe-circuit (12) d'être tiré vers l'extérieur sur lesdits rails de support (16).

5. Dispositif coupe-circuit du type à tiroir selon la revendication 4, caractérisé par le fait que lesdits rails de support (16) sont conçus pour être montés déployables sur ledit caisson (14), au moyen d'une fente (16a) allongée horizontalement qui est pratiquée dans ces rails, ainsi que d'une cheville (15) fixée audit caisson (14) et logée dans ladite fente (16a).

FIG. 1

FIG. 2

FIG. 3

# FIG. 4

# FIG. 5

## FIG. 6

## FIG. 7

## FIG. 8

## FIG. 9

4